# EUROPÄISCHE PATENTSCHRIFT

(11) **EP 1 726 964 B1**
(45) Veröffentlichungstag und Bekanntmachung des Hinweises auf die Patenterteilung: **25.03.2009**
(21) Anmeldenummer: 06112869.0
(22) Anmeldetag: 21.04.2006
(51) Int. Cl.: G01P 1/00, G01D 3/02, G01L 19/04

(54) **Verfahren zur Kompensation der Temperaturdrift von Sensoren im montierten Zustand vor Ort und Vorrichtung zur Kompensation der Temperaturdrift eines Halbleiterbeschleunigungssensors**
Method for locally compensating the temperature drift of sensors in the mounted state and device for compensating the temperature drift of a semiconductor acceleration sensor
Procédé destiné à la compensation de la dérive de température de capteurs en état monté sur place et dispositif de compensation de la dérive de température d'un capteur d'accélération d'un semi-conducteur

(30) Priorität: 24.05.2005 DE 102005023809
(43) Veröffentlichungstag der Anmeldung: 29.11.2006
(73) Patentinhaber: ROBERT BOSCH GMBH, 70442 Stuttgart (DE)
(72) Erfinder: Wolf, Michael, 70806 Kornwestheim (DE)

(56) Entgegenhaltungen:
- DE-A1- 4 227 727
- DE-A1- 19 939 823
- US-A- 5 297 028
- US-A- 5 926 778
- US-B1- 6 456 379
- US-B1- 6 850 859

## Beschreibung

### Stand der Technik

Die Erfindung betrifft ein Verfahren zur Kompensation der Temperaturdrift von Sensoren, bei dem die zur rechnerischen Kompensation der Temperaturdrift einsetzbare Temperaturdriftkurve des temperaturempfindlichen Teils des Sensors im montierten Sensor vor Ort, während der temperaturempfindliche Teil einem Temperaturwechsel unterliegt, durch Erfassung des Sensorsignals bei verschiedenen Temperaturen ermittelt wird. Außerdem betrifft die Erfindung eine Vorrichtung, die zur Durchführung eines solchen Verfahrens bei einem auf einem Halbleitersubstrat ausgebildeten Beschleunigungssensor, insbesondere einem Neigungssensor, geeignet ist.

Ein derartiges Verfahren zur Kompensation der Temperaturdrift ist bereits aus der EP 0 987 663 A1 bekannt, die sich auf einen optischen Rauchmelder bezieht.

Bei Sensoren, speziell bei Halbleitersensoren, spielt das Phänomen der Temperaturdrift, also der Abhängigkeit von insbesondere die Empfindlichkeit des Sensors betreffende Eigenschaften von der Temperatur, allgemein eine störende Rolle. So ist beispielsweise aus der DE 102 36 773 A1 ein Halbleiterbeschleunigungssensor mit einem Metalloxidhalbleiter-Feldeffekttransistor bekannt, bei dem die mikromechanisch aus dem Halbleitersubstrat herausgearbeitete Steuerelektrode des MOSFET beweglich ausgelegt ist. Bei der Herstellung der mechanischen Funktionsschichten können Stressgradienten erzeugt werden, die eine temperaturabhängige Verwölbung der Funktionsschichten aus deren vorgesehener Ebene hervorrufen. Da die Auslenkung der Steuerelektrode senkrecht zu ihrer flachen Oberfläche bei Einwirkung einer Beschleunigung das Sensorsignal generiert, wird dieses durch die Verbiegung temperaturabhängig.

In gewissen Grenzen können konstruktive Maßnahmen bzw. ein erhöhter Prüfaufwand beim Hersteller zu einer Verbesserung der Situation hinsichtlich der Temperaturdrift führen. Diese Maßnahmen sind in vielen Fällen jedoch mit zu hohem Kostenaufwand verbunden.

Aus der US 5,926,778 ist ein Verfahren zur Temperaturkompensation in Messsystemen bekannt, die von der Betriebstemperatur abhängen und deren Temperaturabhängigkeit verursacht wird von temperaturempfindlichen Bauelementen, die elektronisch betreibbar oder thermisch mit einem benachbarten, elektronischen Bauteil verbunden sind, das bereits im Messsystem zum Einsatz kommt. Die Temperaturkompensation erfolgt dabei ohne weitere externe Mittel, wie zum Beispiel eine zusätzliche Heizquelle. Statt dessen ist vorgesehen, einen Temperaturkoeffizienten zu bestimmen und anzuwenden oder die temperaturempfindlichen Bauelemente des Systems bis zu einer festen Betriebstemperatur aufzuheizen, die die Basis für alle Messungen darstellt, oder einen temperaturunabhängigen Betriebspunkt zu bestimmen.

Einen anderen, relativ wenig aufwändigen Weg beschreiten die bekannten, auf der rechnerischen Kompensation der Temperaturdrift mit Hilfe einer Temperaturdriftkurve des temperaturempfindlichen Teils des Sensors beruhenden Verfahren. Die Temperaturdriftkurve kann beispielsweise an einem einzelnen, repräsentativen Sensor bestimmt werden, indem man den Sensor am Ende des Herstellungsprozesses in einen Ofen gibt, einen geeigneten Temperaturzyklus fährt und dabei die Temperaturdriftkurve ausmisst. Die - mehr oder weniger - repräsentative Temperaturdriftkurve wird dann bei allen Sensoren der gleichen Charge in einem nichtflüchtigen Speicherelement abgelegt und später im Betrieb zur Kompensation der Temperaturdrift des individuellen Sensors herangezogen. Da Größe und Vorzeichen der Temperaturdrift jedoch selbst innerhalb einer Fertigungs-Charge stark streuen können und da auch der Langzeitverlauf der Temperaturdrift nur innerhalb relativ großer Fehlergrenzen definiert werden kann, besteht der Wunsch nach einer individuellen und aktuellen Korrektur des Temperaturfehlers eines Sensors. Dies setzt für das bekannte rechnerische Kompensationsverfahren die Ermittlung einer Temperaturdriftkurve im montierten Sensor vor Ort voraus.

Ein derartiges, gattungsgemäßes Verfahren zur Ermittlung der Temperaturdriftkurve eines nach dem Extinktionsprinzip arbeitenden optischen Rauchmelders ist aus der EP 0 987 663 A1 bekannt. Dabei wird die aktuelle Temperaturdriftkurve der temperaturempfindlichen optischen Brücke des Sensors dadurch ermittelt, dass eine im Sensor angeordnete Mikroheizung im montierten Rauchmelder vor Ort periodisch aktiviert und das Sensorsignal bei verschiedenen Temperaturen erfasst wird. Die individuelle und aktuelle Temperaturdriftkurve wird dann in einem Speicherelement abgelegt.

Das bekannte Verfahren ist zum einen deshalb noch nicht zufriedenstellend, da unklar bleibt, wie eine Zuordnung einer bestimmten Heizaktivität zu einer bestimmten Temperatur erfolgen soll. Darüber hinaus wird in der genannten europäischen Patentanmeldung darauf hingewiesen, dass zur Temperaturdriftkompensation des Meldersignals immer die Temperaturdriftkurve des Vortages zu verwenden ist, da nicht ausgeschlossen werden kann, dass es bei der Messung der Temperaturdriftkurve gerade gebrannt hat. Eine derartige Vorgehensweise kommt offenbar bei anderen Sensortypen bzw. Verwendungen nicht in Betracht.

Es ist daher Aufgabe der Erfindung, ein Verfahren bzw. eine Vorrichtung der eingangs genannten Art so weiterzubilden, dass die genannten Nachteile vermieden werden.

Diese Aufgabe wird erfindungsgemäß durch ein Verfahren gemäß Anspruch 1 sowie durch eine Vorrichtung gemäß Anspruch 10 gelöst. Weiterbildungen und bevorzugte Maßnahmen ergeben sich aus den Unteransprüchen.

Gemäß der Erfindung wird - zur Ermittlung der Temperaturdriftkurve im montierten Sensor vor Ort - der temperaturempfindliche Teil des Sensors mit einem definierten Temperaturprofil beaufschlagt, und es wird überprüft, ob die bei einem Durchlauf des Temperaturprofils erfassten Signaländerungen des Sensors mit den dazugehörigen Temperaturänderungen korreliert sind.

Der Erfindung liegt die Erkenntnis zu Grunde, dass bei einer Ermittlung der Temperaturdriftkurve im montierten Sensor vor Ort die aktuelle Eingangsgröße des Sensors im Allgemeinen nicht ohne weiteres bekannt, insbesondere nicht unbedingt Null, ist, so dass Maßnahmen getroffen werden müssen, um die Sicherheit mindestens gegenüber unerkannten nicht temperaturbezogenen Einwirkungen auf das Sensorsignal während der laufenden Ermittlung der Temperaturdriftkurve zu erhöhen. Erfindungsgemäß sind zur Lösung dieses Problems der möglichen Überlagerung des Temperaturdrifteffekts durch reguläre Detektiereffekte, mit denen auch während der Ermittlung der Temperaturdriftkurve immer zu rechnen ist, Maßnahmen erforderlich, um die gemessenen Signaländerungen überhaupt auf ein eindeutiges Temperaturprofil beziehen zu können. Weiterhin erfolgt eine über die in der Temperaturdriftkurve erfolgte Erfassung der rein zeitlichen Korrelation der Sensorsignal- und Temperaturwerte hinausgehende Überprüfung der Korrelation zwischen den erfassten Signaländerungen und den dazugehörigen Temperaturänderungen, so dass in der ermittelten Temperaturdriftkurve möglichst nur wirklich temperaturbedingte Signaländerungen Berücksichtigung finden.

Mittels des erfindungsgemäßen Verfahrens können temperaturbedingte Verfälschungen des Messsignals im verbauten Zustand des Sensors ermittelt und, je nach Linearität des Temperaturkoeffizienten, reduziert bzw. kompensiert werden. Dadurch entfällt die für den jeweiligen Parameter ansonsten erforderliche zeit- bzw. kostenaufwändige Bandendkontrolle beim Hersteller. Dabei erfordert der Abgleich der temperaturbedingten Fehler im Produkt keine kostenintensiven Hardware-Ressourcen. Besonders vorteilhaft ist, dass der erfindungsgemäße Abgleich für jeden einzelnen, individuellen Sensor optimierte Kompensationsdaten liefert. Damit lässt sich gegenüber der vom Sensorhersteller angegebenen Streuung bzw. den Maximaltoleranzen eine entscheidende Verbesserung erzielen. Im übrigen ist der Abgleich nicht auf spezielle Betriebszustände begrenzt, welche eine bekannte Eingangsgröße des Sensorsignals, insbesondere Null, besitzen.

Gemäß einer bevorzugten Ausgestaltung des erfindungsgemäßen Verfahrens erfolgt zur Überprüfung der Korrelation bei der Ermittlung einer neuen Temperaturdriftkurve ein mindestens zweimaliger Durchlauf des Temperaturprofils, wobei eine Korrektur der alten Temperaturdriftkurve nur dann erfolgt, wenn die jeweils an einer gleichen Stelle des Temperaturprofils festgestellten, zu unterschiedlichen Durchläufen gehörigen Signaländerungen untereinander eine vorgebbare Mindestübereinstimmung aufweisen. In besonders einfacher Weise kann dies dadurch erreicht werden, dass bei einer Anzahl von Signaländerungen, die zur gleichen Stelle des Temperaturprofils, aber zu unterschiedlichen Durchläufen gehören, das Vorliegen einer vorgebbaren Mindestanzahl von Signaländerungen mit gleichem Vorzeichen der Temperaturdrift als für die Korrektur der Temperaturdriftkurve ausreichende Übereinstimmung an dieser Stelle gewertet wird.

Das erforderliche eindeutige Temperaturprofil im Sensor kann auf mehrere, alternative Arten implementiert werden, wobei jeweils ein bewusst erzeugter oder periodisch vorhandener Temperaturgradient am Sensor dazu benutzt wird, Informationen über dessen temperaturbedingtes Verhalten im Betrieb zu erhalten.

Eine vorteilhafte Möglichkeit besteht darin, eine passive Umgebungstemperaturänderung des Sensors auszunutzen, um die Signaländerungen des Sensors zu bestimmen, wobei die gemessenen Signaländerungen durch Vergleich mit dem Signal eines Temperaturfühlers, der thermisch mit dem temperaturempfindlichen Teil des Sensors gekoppelt ist, auf ein eindeutiges Temperaturprofil bezogen werden. Eine besonders vorteilhafte weitere Ausgestaltung dieser Variante besteht darin, dass bei einem im Motorraum eines Kraftfahrzeugs eingebauten Sensor das nach Abstellen des Motors erfolgende Abkühlen des betriebswarmen Motorraums als passive Umgebungstemperaturänderung ausgenutzt wird.

Gemäß einer weiteren, besonders bevorzugten Ausgestaltung des erfindungsgemäßen Verfahrens ist der Sensor auf einer Fläche eines Halbleitersubstrats ausgebildet, auf dem außerdem zur steuerbaren Wärmeerzeugung einsetzbare Bauteile vorgesehen sind, durch die das Halbleitersubstrat homogen erwärmbar ist, so dass durch Heizen des Halbleitersubstrats eine aktive interne Temperaturänderung erzeugt wird, um die Signaländerungen des Sensors zu bestimmen. Dabei können die gemessenen Signaländerungen durch Vergleich mit dem Signal eines ebenfalls auf dem Halbleitersubstrat integrierten Temperaturfühlers auf ein eindeutiges Temperaturprofil bezogen werden.

Vorteilhafterweise kann bei allen Ausgestaltungen, bei denen zur Ermittlung der Temperaturdriftkurve ein Temperaturfühler vorgesehen ist, dieser Temperaturfühler im Betrieb des Sensors zur Kompensation der Temperaturdrift entsprechend einer durch den Temperaturfühler erfassten aktuellen Temperatur herangezogen werden.

Bei einer Variante des erfindungsgemäßen Verfahrens, die ohne Temperaturfühler auskommt, ist der Sensor auf einer Leiterplatte angeordnet und auf der Leiterplatte ist mindestens ein wärmeerzeugendes elektrisches Bauelement angeordnet, so dass durch externes Heizen wenigstens am temperaturempfindlichen Teil des Sensors eine aktive Temperaturänderung erzeugt wird, um die Signaländerungen des Sensors zu bestimmen. Bei dieser Variante werden die gemessenen Signaländerungen dadurch auf ein eindeutiges Temperaturprofil bezogen, dass durch das Schaltungslayout der Leiterplatte eine steuerbare Wärmeerzeugung mit definierter thermischer Zeitkonstante festlegbar ist.

Generell kann das erfindungsgemäße Verfahren mit Vorteil in der Weise durchgeführt werden, dass eine Ermittlung der Temperaturdriftkurve von einer Auswerteschaltung in solchen Zeiträumen initiiert wird, in denen gemäß den Einsatzbedingungen des Sensors eine geringe Nutzsignalaktivität des Sensors zu erwarten ist. Dadurch kann insbesondere der rechnerische Aufwand, bzw. die Anzahl der Durchläufe oder die Anzahl der Überprüfungsstellen bei der Überprüfung der Korrelation zwischen den Signal- und Temperaturänderungen verringert werden.

Eine erfindungsgemäße Vorrichtung zur Kompensation der Temperaturdrift eines auf der Fläche eines Halbleitersubstrats ausgebildeten Beschleunigungssensors, insbesondere Neigungssensors, umfasst mindestens ein auf dem Halbleitersubstrat integriertes Bauelement oder andere auf dem Halbleitersubstrat vorhandene Bauteile zur elektrisch steuerbaren homogenen Erwärmung des Halbleitersubstrats entsprechend einem definierten Temperaturprofil bei der Ermittlung einer Temperaturdriftkurve im montierten Beschleunigungssensor vor Ort. Weiterhin sind eine Auswerteschaltung, die ein nichtflüchtiges Speicherelement aufweist, in welchem die Temperaturdriftkurve des Beschleunigungssensors abgelegt ist, und die die Korrelation der bei einem Durchlauf des Temperaturprofils erfassten Signaländerungen mit den dazugehörigen Temperaturänderungen überprüft, sowie Mittel zur rechnerischen Kompensation des Einflusses der Temperaturdriftkurve auf das Beschleunigungssensorsignal vorgesehen. Ein auf dem Halbleitersubstrat integrierter Temperaturfühler dient zur Erfassung von Temperaturwerten während der Ermittlung der Temperaturdriftkurve und - im Betrieb des Beschleunigungssensors - zur Kompensation der dem aktuellen Temperaturwert entsprechenden Temperaturdrift.

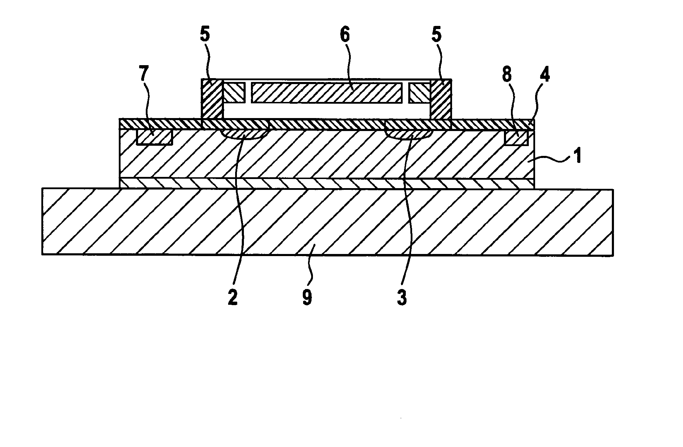

Ein Ausführungsbeispiel der Erfindung wird im Folgenden anhand der einzigen Figur der Zeichnung näher erläutert.

Die Figur zeigt eine Schnittansicht, welche eine zur Durchführung des erfindungsgemäßen Verfahrens geeignete erfindungsgemäße Vorrichtung mit einem Halbleiterbeschleunigungssensor und einer Auswerteschaltung schematisch darstellt.

Die in der Figur dargestellte erfindungsgemäße Vorrichtung weist beispielhalber einen auf der Fläche eines Halbleitersubstrates 1 ausgebildeten Beschleunigungssensor auf, der einen Feldeffekttransistor, bestehend aus dem Siliziumsubstrat 1 mit darin eingebetteter Source-Elektrode 2 und Drain-Elektrode 3, umfasst. Auf einer Isolationsschicht 4 sind elektrisch isolierende Aufhängungen 5 und eine bewegliche Detektionselektrode 6 zur Modulierung des Stromflusses des Transistors 1, 2 und 3 angeordnet. Bei einer auf den Sensor einwirkenden Beschleunigung erfährt die Detektionselektrode 6 in an sich bekannter Weise eine lineare Auslenkung senkrecht zu ihrer flachen Oberfläche, wodurch sich die Steuerspannung des Transistors in Abhängigkeit von der einwirkenden Beschleunigung ändert. Im Halbleitersubstrat 1 ist außerdem ein Heizwiderstand 7 sowie ein Temperaturfühler 8 integriert. Der Halbleiterbeschleunigungssensor insgesamt ist auf einem Schaltungschip 9 angeordnet und mit diesem elektrisch verbunden. Der Schaltungschip 9 führt einerseits die Auswertung des Sensorsignals bei der Detektion und andererseits die bei der Durchführung des erfindungsgemäßen Verfahrens zu Überprüfung der Korrelation erforderlichen Operationen aus.

Das erfindungsgemäße Verfahren bzw. die erfindungsgemäße Vorrichtung sind nicht an die in der Figur dargestellten Einzelheiten gebunden. Beispielsweise könnte ein kapazitiver Beschleunigungssensor oder ein anderer (Halbleiter)Sensor verwendet werden und/oder die Auswerteschaltung könnte statt in dem dargestellten Schaltungschip 9 auf dem Sensorchip 1 selbst integriert sein. Zur schnellen und homogenen Erwärmung des Halbleitersubstrats 1 kann es im übrigen vorteilhaft sein, symmetrisch auf beiden Seiten des Beschleunigungssensors einen Heizwiderstand 7 vorzusehen.

Zur erfindungsgemäßen Bestimmung der Temperaturdriftkurve wird der Sensor mit einem definieren Temperaturprofil beaufschlagt, wobei die Temperatur(änderung) gemessen bzw. bestimmt wird. Dabei kommen insbesondere folgende Alternativen in Frage:
Bei einer aktiven internen Temperaturänderung enthält der Halbleitersensor, wie in der Figur dargestellt, einen Heizwiderstand 7 oder es wird die steuerbare Wärmeerzeugung anderer, auf dem Substrat 1 vorhandener Bauteile zur homogenen Erwärmung des Substrats 1 genutzt. Über einen ebenfalls integrierten Temperaturfühler 8, im einfachsten Fall eine Diode, wird die Temperaturänderung erfasst.

Bei einer alternativen (nicht dargestellten) aktiven internen Temperaturänderung wird der auf einer Leiterplatte angeordnete Sensor auf der Leiterplatte gezielt durch umgebende Bauteile, vorzugsweise Widerstände, erwärmt. Die Temperaturänderung kann dabei auf Grund der Schaltungsgeometrie ausreichend genau abgeschätzt werden, falls auf einen Temperaturfühler verzichtet werden soll. Durch eine gezielte Koppelung von Wärmequelle und Sensor wird dabei die thermische Zeitkonstante für den Temperaturdrift-Erwartungswert festgelegt. Damit kann auch ein gegebenenfalls entsprechend kurzes Zeitfenster für die Erfassung der Temperaturdriftkurve im vorhinein festgelegt werden. Ein (vor)gegebenes Schaltungslayout legt also im wesentlichen eine Zeitkonstante für den Erwartungswert fest, so dass die Temperatur in erster Näherung durch die Heizleistung bestimmt ist.

Bei einer weiteren Alternative, einer passiven Umgebungstemperaturänderung, kann der Sensor beispielsweise im Motorraum installiert sein, so dass die auszunutzende passive Temperaturänderung beim Abkühlen des betriebswarmen Motorraums bei Stillstand erfolgt. Die Temperaturdrift des Sensors wird erfasst und mit dem Signal eines externen, thermisch mit dem Sensor bzw. mit dem temperaturempfindlichen Teil des Sensors gekoppelten Temperaturfühlers verglichen.

In der verarbeitenden Schaltung 9, vorzugsweise einem Mikroprozessor, erkennt ein das erfindungsgemäße Verfahren implementierender Algorithmus, ob die Änderung des Messwerts (Sensorsignal) mit der Temperaturänderung des Sensors korreliert ist. Dieser Algorithmus optimiert durch mehrfachen Durchlauf eines Heizzyklus die Sicherheit gegenüber nicht temperaturbezogenen Einwirkungen. Erst wenn eine ausreichende Anzahl von Messergebnissen in dieselbe Richtung weisen, werden die gewonnenen Abgleichdaten sukzessive zur Korrektur der Temperaturdriftkurve eingesetzt. Das System kann leicht so ausgestaltet werden, dass die Ermittlung der Temperaturdriftkurve in solchen Betriebszeiträumen initiiert wird, in denen gemäß der vorgesehenen Verwendung des Sensors eine geringe Nutzsignalaktivität des Sensors erwartet wird.

Die Erfindung kann mit Vorteil bei der Anwendung eines Halbleiterbeschleunigungssensors als Neigungssensor, insbesondere im Rahmen einer KfZ-Diebstahlwarnanlage, eingesetzt werden. In diesem Zusammenhang sind nur sehr geringe Werte der Temperaturdrift akzeptabel, damit eine eindeutige Zuordnung des Nutzsignals, also dem Anheben des Fahrzeugs, möglich wird. Die Zuverlässigkeit einer derartigen Warnanlage bei Betriebszeiten von mehr als 100.000 Stunden setzt deshalb das sichere Unterdrücken von Störgrößen voraus, um Fehlalarme zu vermeiden. Diese Zuverlässigkeit kann hinsichtlich der Temperaturdrift durch die zur rechnerischen Kompensation einsetzbare erfindungsgemäße individuelle und aktuelle Ermittlung der Temperaturdriftkurve des Sensors im verbauten Zustand gewährleistet werden.

## Patentansprüche

1. Verfahren zur Kompensation der Temperaturdrift von Sensoren, bei dem die zur rechnerischen Kompensation der Temperaturdrift einsetzbare Temperaturdriftkurve des temperaturempfindlichen Teils (6) des Sensors im montierten Sensor vor Ort, während der temperaturempfindliche Teil (6) einem Temperaturwechsel unterliegt, durch Erfassung des Sensorsignals bei verschiedenen Temperaturen ermittelt wird,
**dadurch gekennzeichnet,**
**dass** der temperaturempfindliche Teil (6) des Sensors zur Ermittlung der Temperaturdriftkurve mit einem definierten Temperaturprofil beaufschlagt wird, und dass überprüft wird, ob die bei einem Durchlauf des Temperaturprofils erfassten Signaländerungen des Sensors mit den dazugehörigen Temperaturänderungen korreliert sind.

2. Verfahren nach Anspruch 1, **dadurch gekennzeichnet, dass** zur Überprüfung der Korrelation bei der Ermittlung einer neuen Temperaturdriftkurve ein mindestens zweimaliger Durchlauf des Temperaturprofils erfolgt, wobei eine Korrektur der alten Temperaturdriftkurve nur dann erfolgt, wenn die jeweils an einer gleichen Stelle des Temperaturprofils festgestellten, zu unterschiedlichen Durchläufen gehörigen Signaländerungen untereinander eine vorgebbare Mindestübereinstimmung aufweisen.

3. Verfahren nach Anspruch 2, **dadurch gekennzeichnet, dass** bei einer Anzahl von Signaländerungen, die zur gleichen Stelle des Temperaturprofils, aber zu unterschiedlichen Durchläufen gehören, das Vorliegen einer vorgebbaren Mindestanzahl von Signaländerungen mit gleichem Vorzeichen der Temperaturdrift als für die Korrektur der Temperaturdriftkurve ausreichende Übereinstimmung an dieser Stelle gewertet wird.

4. Verfahren nach einem der Ansprüche 1 bis 3, **dadurch gekennzeichnet, dass** eine passive Umgebungstemperaturänderung des Sensors ausgenutzt wird, um die Signaländerungen des Sensors zu bestimmen, wobei die gemessenen Signaländerungen durch Vergleich mit dem Signal eines Temperaturfühlers (8), der thermisch mit dem temperaturempfindlichen Teil (6) des Sensors gekoppelt ist, auf ein eindeutiges Temperaturprofil bezogen werden.

5. Verfahren nach Anspruch 4, **dadurch gekennzeichnet, dass** bei einem im Motorraum eines Kraftfahrzeugs eingebauten Sensor das nach Abstellen des Motors erfolgende Abkühlen des betriebswarmen Motorraums als passive Umgebungstemperaturänderung ausgenutzt wird.

6. Verfahren nach einem der Ansprüche 1 bis 3, **dadurch gekennzeichnet, dass** der Sensor auf einer Fläche eines Halbleitersubstrats (1) ausgebildet ist und dass auf dem Halbleitersubstrat (1) zur steuerbaren Wärmeerzeugung einsetzbare Bauteile (7) vorgesehen sind, durch die das Halbleitersubstrat (1) homogen erwärmbar ist, so dass durch Heizen des Halbleitersubstrats (1) eine aktive interne Temperaturänderung erzeugt wird, um die Signaländerungen des Sensors zu bestimmen, wobei die gemessenen Signaländerungen durch Vergleich mit dem Signal eines auf dem Halbleitersubstrat (1) integrierten Temperaturfühlers (8) auf ein eindeutiges Temperaturprofil bezogen werden.

7. Verfahren nach einem der Ansprüche 1 bis 6, **dadurch gekennzeichnet, dass** der zur Ermittlung der Temperaturdriftkurve einsetzbare Temperaturfühler (8) im Betrieb des Sensors zur Kompensation der Temperaturdrift entsprechend einer durch den Temperaturfühler (8) erfassten aktuellen Temperatur herangezogen wird.

8. Verfahren nach einem der Ansprüche 1 bis 3, **dadurch gekennzeichnet, dass** der Sensor auf einer Leiterplatte angeordnet ist und dass auf der Leiterplatte mindestens ein wärmeerzeugendes elektrisches Bauelement angeordnet ist, so dass durch externes Heizen wenigstens am temperaturempfindlichen Teil (6) des Sensors eine aktive Temperaturänderung erzeugt wird, um die Signaländerungen des Sensors zu bestimmen, wobei die gemessenen Signaländerungen **dadurch** auf ein eindeutiges Temperaturprofil bezogen werden, dass durch das Schaltungslayout der Leiterplatte eine steuerbare Wärmeerzeugung mit definierter thermischer Zeitkonstante festlegbar ist.

9. Verfahren nach einem der Ansprüche 1 bis 8, **dadurch gekennzeichnet, dass** eine Auswerteschaltung (9) vorgesehen ist, die die Ermittlung der Temperaturdriftkurve in solchen Betriebszeiträumen initiiert, in denen gemäß der vorgesehenen Verwendung des Sensors eine geringe Nutzsignalaktivität des Sensors erwartet wird.

10. Vorrichtung zur Kompensation der Temperaturdrift eines auf der Fläche eines Halbleitersubstrats (1) ausgebildeten Beschleunigungssensors, insbesondere Neigungssensors,
- mit mindestens einem auf dem Halbleitersubstrat (1) integrierten Bauelement (7) oder anderer auf dem Halbleitersubstrat (1) vorhandener Bauteile zur elektrisch steuerbaren homogenen Erwärmung des Halbleitersubstrats (1) entsprechend einem definierten Temperaturprofil bei der Ermittlung einer Temperaturdriftkurve im montierten Beschleunigungssensor vor Ort,
- mit einer Auswerteschaltung (9), die ein nichtflüchtiges Speicherelement aufweist, in welchem die Temperaturdriftkurve des Beschleunigungssensors abgelegt ist, und die die Korrelation der bei einem Durchlauf des Temperaturprofils erfassten Signaländerungen mit den dazugehörigen Temperaturänderungen überprüft,
- mit Mitteln zur rechnerischen Kompensation des Einflusses der Temperaturdriftkurve auf das Beschleunigungssensorsignal und
- mit einem auf dem Halbleitersubstrat (1) integrierten Temperaturfühler (8), der zur Erfassung von Temperaturwerten während der Ermittlung der Temperaturdriftkurve und - im Betrieb des Beschleunigungssensors - zur Kompensation der dem aktuellen Temperaturwert entsprechenden Temperaturdrift vorgesehen ist.

## Claims

1. Method for compensating for the temperature drift of sensors, in which the temperature drift curve - which can be used to computationally compensate for the temperature drift - of the temperature-sensitive part (6) of the sensor is determined in the mounted sensor in situ, while the temperature-sensitive part (6) is subject to a temperature change, by detecting the sensor signal at different temperatures,
**characterized in that**
a defined temperature profile is applied to the temperature-sensitive part (6) of the sensor in order to determine the temperature drift curve, and **in that** a check is carried out in order to determine whether the signal changes of the sensor which are detected when passing through the temperature profile are correlated with the associated temperature changes.

2. Method according to Claim 1, **characterized in that** the temperature profile is passed through at least twice in order to check the correlation when determining a new temperature drift curve, the old temperature drift curve being corrected only when the signal changes which are respectively determined at the same point in the temperature profile and are associated with different passes have a predefinable minimum match.

3. Method according to Claim 2, **characterized in that**, when there are a number of signal changes which are associated with the same point in the temperature profile but are associated with different passes, the presence of a predefinable minimum number of signal changes with the same sign of the temperature drift is judged to be a match at this point which suffices to correct the temperature drift curve.

4. Method according to one of Claims 1 to 3, **characterized in that** a passive ambient temperature change of the sensor is used to determine the signal changes of the sensor, the measured signal changes being related to an unambiguous temperature profile by comparing them with the signal from a temperature sensor (8) which is thermally coupled to the temperature-sensitive part (6) of the sensor.

5. Method according to Claim 4, **characterized in that**, when a sensor is installed in the engine compartment of a motor vehicle, the cooling of the engine compartment which is at operating temperature, which takes place after the engine has been switched off, is used as a passive ambient temperature change.

6. Method according to one of Claims 1 to 3, **characterized in that** the sensor is formed on a surface of a semiconductor substrate (1), and **in that** subassemblies (7) which can be used to generate heat in a controllable manner are provided on the semiconductor substrate (1) and can be used to homogeneously heat the semiconductor substrate (1), such that an active internal temperature change is produced by heating the semiconductor substrate (1) in order to determine the signal changes of the sensor, the measured signal changes being related to an unambiguous temperature profile by comparing them with the signal from a temperature sensor (8) which is integrated on the semiconductor substrate (1).

7. Method according to one of Claims 1 to 6, **characterized in that** the temperature sensor (8) which can be used to determine the temperature drift curve is used, during operation of the sensor, to compensate for the temperature drift according to a current temperature detected by the temperature sensor (8).

8. Method according to one of Claims 1 to 3, **characterized in that** the sensor is arranged on a printed circuit board, and **in that** at least one heat-generating electrical component is arranged on the printed circuit board, with the result that an active temperature change is produced at least on the temperature-sensitive part (6) of the sensor by means of external heating in order to determine the signal changes of the sensor, the measured signal changes being related to an unambiguous temperature profile by virtue of the fact that the circuit layout of the printed circuit board makes it possible to set controllable heat generation with a defined thermal time constant.

9. Method according to one of Claims 1 to 8, **characterized in that** an evaluation circuit (9) is provided, said circuit initiating the determination of the temperature drift curve in those operating periods in which little useful signal activity of the sensor is expected according to the intended use of the sensor.

10. Device for compensating for the temperature drift of an acceleration sensor, in particular an inclination sensor, which is formed on the surface of a semiconductor substrate (1),
- having at least one component (7) which is integrated on the semiconductor substrate (1) or other subassemblies on the semiconductor substrate (1) for electrically heating the semiconductor substrate (1) in a controllable and homogeneous manner according to a defined temperature profile when determining a temperature drift curve in the mounted acceleration sensor in situ,
- having an evaluation circuit (9) which has a non-volatile memory element, which stores the temperature drift curve of the acceleration sensor, and checks the correlation of the signal changes detected when passing through the temperature profile with the associated temperature changes,
- having means for computationally compensating for the influence of the temperature drift curve on the acceleration sensor signal, and
- having a temperature sensor (8) which is integrated on the semiconductor substrate (1) and is intended to detect temperature values while determining the temperature drift curve and, during operation of the acceleration sensor, is intended to compensate for the temperature drift corresponding to the current temperature value.

## Revendications

1. Procédé de compensation de la dérive en température de capteurs, avec lequel la courbe de dérive en température, utilisable pour la compensation mathématique de la dérive en température, de la partie sensible à la température (6) du capteur est déterminée dans le capteur monté sur site pendant que la partie sensible à la température (6) est soumise à un changement de température par une acquisition du signal du capteur à différentes températures, **caractérisé en ce que** la partie sensible à la température (6) du capteur est soumise à un profil de température donné en vue de déterminer la courbe de dérive en température et qu'un contrôle est effectué pour vérifier si les variations du signal du capteur détectées en balayant le profil de température sont en corrélation avec les variations de température associées.

2. Procédé selon la revendication 1, **caractérisé en ce qu'**au moins un double balayage du profil de température est effectué pour vérifier la corrélation lors de la détermination d'une nouvelle courbe de dérive en température, une correction de l'ancienne courbe de dérive en température n'étant effectuée que si les variations du signal appartenant à des balayages différents constatées à un même endroit du profil de température présentent entre elles une concordance minimale pouvant être prédéfinie.

3. Procédé selon la revendication 2, **caractérisé en ce qu'**en présence d'un nombre donné de variations du signal qui correspondent au même endroit du profil de température, mais qui appartiennent à des balayages différents, la présence d'un nombre minimum de variations du signal ayant le même signe de dérive en température est interprétée comme une concordance suffisante en cet endroit pour la correction de la courbe de dérive en température.

4. Procédé selon l'une des revendications 1 à 3, **caractérisé en ce qu'**une variation passive de la température ambiante du capteur est utilisée pour déterminer les variations du signal du capteur, les variations mesurées du signal étant rapportées à un profil de température explicite par une comparaison avec le signal d'une sonde de température (8) qui est couplée thermiquement avec la partie sensible à la température (6) du capteur.

5. Procédé selon la revendication 4, **caractérisé en ce que** dans le cas d'un capteur installé dans le compartiment moteur d'un véhicule automobile, le refroidissement du compartiment moteur chaud du fait du fonctionnement qui a lieu après l'arrêt du moteur est utilisé comme variation passive de la température ambiante.

6. Procédé selon l'une des revendications 1 à 3, **caractérisé en ce que** le capteur est constitué d'une surface d'un substrat en semiconducteur (1) et que des composants (7) pouvant être utilisés pour une production de chaleur contrôlable sont prévus sur le substrat en semiconducteur (1), lesquels permettent d'effectuer un réchauffement homogène du substrat en semiconducteur (1) de manière à produire une variation de température interne active en chauffant le substrat en semiconducteur (1) afin de déterminer les variations du signal du capteur, les variations mesurées du signal étant rapportées à un profil de température explicite par comparaison avec le signal d'une sonde de température (8) intégrée sur le substrat en semiconducteur (1).

7. Procédé selon l'une des revendications 1 à 6, **caractérisé en ce que** la sonde de température (8) utilisable pour déterminer la courbe de dérive en température est utilisée pendant le fonctionnement du capteur pour compenser la dérive en température en fonction d'une température actuelle détectée par la sonde de température (8).

8. Procédé selon l'une des revendications 1 à 3, **caractérisé en ce que** le capteur est disposé sur un circuit imprimé et qu'au moins un composant électrique générateur de chaleur est disposé sur le circuit imprimé, de manière à produire une variation de température active par un chauffage externe au moins au niveau de la partie sensible à la température (6) du capteur afin de déterminer les variations du signal du capteur, les variations mesurées du signal étant rapportées à un profil de température explicite de telle sorte que l'implantation du circuit imprimé permet de définir une production de chaleur contrôlable avec une constante de temps thermique donnée.

9. Procédé selon l'une des revendications 1 à 8, **caractérisé en ce qu'**il est prévu un circuit d'interprétation (9) qui initie la détermination de la courbe de dérive en température pendant les périodes de fonctionnement dans lesquelles, d'après l'utilisation prévue du capteur, est attendue une faible activité du signal utile du capteur.

10. Dispositif de compensation de la dérive en température d'un capteur d'accélération configuré sur la surface d'un substrat en semiconducteur (1), notamment un capteur d'inclinaison,
- comprenant au moins un composant (7) intégré sur le substrat en semiconducteur (1) ou d'autres composants présents sur le substrat en semiconducteur (1) pour un réchauffement homogène du substrat en semiconducteur (1) conformément à un profil de température donné lors de la détermination d'une courbe de dérive en température dans le capteur d'accélération monté sur site,
- comprenant un circuit d'interprétation (9) qui présente une mémoire non volatile dans laquelle est stockée la courbe de dérive en température du capteur d'accélération et qui contrôle la corrélation des variations du signal détectées lors d'un balayage du profil de température avec les variations de température associées,
- comprenant des moyens pour la compensation mathématique de l'influence de la dérive en température sur le signal du capteur d'accélération et
- comprenant une sonde de température (8) intégrée sur le substrat en semiconducteur (1), laquelle est prévue pour détecter les valeurs de la température pendant la détermination de la courbe de dérive en température, pendant le fonctionnement du capteur d'accélération, pour compenser la dérive en température correspondant à la valeur actuelle de la température.
